# EUROPÄISCHE PATENTSCHRIFT

(11) **EP 2 040 066 B1**
(45) Veröffentlichungstag und Bekanntmachung des Hinweises auf die Patenterteilung: **08.03.2017**
(21) Anmeldenummer: 07018527.7
(22) Anmeldetag: 20.09.2007
(51) Int. Cl.: G01N 27/333, G01N 31/16, C08L 75/06

(54) **Verwendung eines Sensormaterials für eine potentiometrische Elektrode**
Use of sensor material in a potentiometric electrode
Emploi d'un matériau de détection pour une électrode potentiométrique

(43) Veröffentlichungstag der Anmeldung: 25.03.2009
(73) Patentinhaber: OESCH SENSOR TECHNOLOGY AG, 7320 Sargans (CH)
(72) Erfinder: Oesch, Urs, 7324 Vilters (CH)
(74) Vertreter: Schaad, Balass, Menzl & Partner AG

(56) Entgegenhaltungen:
- WO-A-99/38004
- WO-A-02/064656
- FOGT E J ET AL: "Simplified procedure for forming polymer-based ion-selective electrodes" ANALYTICAL CHEMISTRY, Bd. 57, Nr. 6, Mai 1985 (1985-05), Seiten 1155-1157, XP002471160 ISSN: 0003-2700
- ANONYMOUS: "TYGOTHANE" INTERNET ARTICLE, [Online] 2000, Seiten 1-2, XP002471161 Gefunden im Internet: URL:kmac-distribution.com/Plastics/data%20 sheets/C210A.pdf> [gefunden am 2008-02-26]
- SANCHEZ J ET AL: "A new potentiometric photocurable membrane selective to anionic surfactants" ELECTROANALYSIS, Bd. 13, Nr. 6, April 2001 (2001-04), Seiten 471-476, XP002471162 ISSN: 1040-0397
- MATESIC-PUAC R ET AL: "Potentiometric determination of soaps and mixtures of soaps with anionic surfactants using a new surfactant sensor" TENSIDE, SURFACTANTS, DETERGENTS., Bd. 39, Nr. 4, 2002, Seiten 72-76, XP001537958 ISSN: 0932-3414
- E. Lindner ET AL: "Ion-selective membranes with low plasticizer content: Electroanalytical characterization and biocompatibility studies", JOURNAL OF BIOMEDICAL MATERIALS RESEARCH, vol. 28, no. 5, 1 May 1994 (1994-05-01), pages 591-601, XP55242980, US ISSN: 0021-9304, DOI: 10.1002/jbm.820280509
- Robert E. Gyurcsányi ET AL: "Spectroscopic Method for the Determination of the Ionic Site Concentration in Solvent Polymeric Membranes and Membrane Plasticizers", Analytical Chemistry, vol. 74, no. 16, 1 August 2002 (2002-08-01), pages 4060-4068, XP55242872, US ISSN: 0003-2700, DOI: 10.1021/ac020120k

## Beschreibung

Die vorliegende Erfindung betrifft die Verwendung eines Sensormaterials für eine potentiometrische Elektrode und insbesondere für eine Tensid-Elektrode zur Bestimmung von Tensiden in Zweiphasen-Medien. Beschrieben wird auch ein Verfahren zur Herstellung des Sensormaterials sowie dessen Verwendung in einer Elektrode.

Tenside werden heutzutage in den unterschiedlichsten Bereichen eingesetzt. Sie werden beispielsweise in der Lebensmittelindustrie, in der Kunststoffindustrie und insbesondere in der Waschmittel- und der Kosmetikbranche verwendet und dienen dabei unter anderem als Emulgatoren, Netz- und Dispergiermittel. Die vielfältigen Anwendungen machen auch eine gute Tensid-Analytik notwendig. Der Tensid-Gehalt soll dabei möglichst rasch, genau und richtig bestimmt werden.

Eine bereits seit langem bekannte Methode zur Bestimmung von Tensiden ist die 2-Phasen-Titration nach Epton. Dabei wird zur wässrigen Phase eine zweite, organische und nicht mit Wasser mischbare Phase zugegeben. Das sich während der Titration aus den beiden ionischen Tensiden bildende lonenpaar wird durch Extraktion in die organische Phase überführt und damit stabilisiert. Als organische Phase wird typischerweise Dichlormethan oder Chloroform verwendet. Beide Lösungsmittel sind gesundheitsschädlich und belasten bei ihrer Entsorgung die Umwelt stark. Chloroform ist zum Beispiel in den USA für analytische Anwendungen verboten.

Vytras beschreibt in "Potentiometric Titrations based on Ion-Pair Formation" gebräuchliche Elektroden sowie Titrationsmittel zur Bestimmung von ionischen und nicht-ionischen Tensiden (Ion Selective Electrode Rev., 1985, Vol. 7, Seiten 77 - 164).

Matesic-Puac et al. offenbaren einen Tensid-Sensor zur Bestimmung von Seifen und ihrer Mischungen mit anionischen Tensiden. Der Sensor basiert auf einer "coated-wire" Elektrode, wobei PVC und Graphit-PTFE als Matrize beziehungsweise als leitendes Substrat dienen (Tenside Surf. Det., 39, 2002, 4, Seiten 72 - 76).

Kovacs et al. offenbaren Tensid-Elektroden basierend auf einem Tensid-lonenpaar als aktiver Komponente, eingebettet in einer Polymermembran aus PVC und o-NPOE (ortho-Nitrophenyl-Octylether) (Kovacs et al., "All solid-state surfactant sensing electrode using conductive polymer as internal electric conduit", Analytica Chimica Acta, 437, 2001, Seiten 67 - 76).

Sak-Bosnar et al. beschreiben unter anderem auf PVC-Membranen basierende Elektroden zur potentiometrischen Bestimmung von ionischen und nicht-ionischen Tensiden in biotechnologischen Prozessen (Sak-Bosnar et al., "Surfactant Sensors in Biotechnology Part 1 - Electrochemical Sensors", Food Technol. Biotechnol., 42, 3, 2004, Seiten 197 - 206).

Die WO 99/38004 offenbart eine Titriervorrichtung zur Bestimmung von Tensiden. Die Titriervorrichtung umfasst eine Tensid-Elektrode mit einem Sensormaterial aus einem plastisch verformbaren, leitfähigen Material. Das Sensormaterial kann optional einen lonophor und weitere Additive enthalten.

Fogt E J et al. "Simplified procedure for forming polymer-based ion-selective electrodes", Analytical Chemistry, Band 57, Nr. 6, Seiten 1155-1157, Mai 1985 beschreibt ein Verfahren zur Herstellung eines Sensormaterials für polymerbasierte ionen-selektive Elektroden. Polyurethane wie Tygon R3603 werden ebenfalls erwähnt.

Unter dem Handelsnahmen Tygothane wird in einem Internetartikel von KMAC Distribution dieses Polyurethane-basierte Material als Schlauchmaterial für Laborzwecke beschrieben. Tygothane weist eine Shore A Härte von 82 auf.

WO 02/064656 beschreibt die Herstellung von hochmolekularen thermoplastischen Polyurethanen aus Polyolen, wobei die Polyurethane im Wesentlichen linear und frei von Vernetzungen sind.

LINDNER E et al. "Ion-selective membranes with low plasticizer content: Electroanalytical characterization and biocompatibility studies" in JOURNAL OF BIOMEDICAL MATERIALS RESEARCH, Bd. 28, Nr. 5, 1. Mai 1994, Seiten 591-601, XP55242980, ISSN 0021-9304 beschreibt Ionen-selektive Membranen basierend auf hochmolekularem PVC oder aliphatischem Polyurethan mit oder ohne Weichmacher und deren Biokompatibilität, insbesondere in Abhängigkeit vom Anteil des Weichmachers in der Polyurethan-Membran (Tecoflex).

GYURCSÄNYI R E et al. "Spectroscopic method for the determination of the ionic site concentration in solvent polymeric membranes and membrane plasticizers" in ANALYTICAL CHEMISTRY, Bd. 74, Nr. 16, 1. August 2002, Seiten 4060-4068, XP55242872, US ISSN 0003-2700 beschreibt eine neue spektrofotometrische Methode zur Bestimmung der Ionenstellendichte in polymerbasierten Membranen mit Weichmacher und in Weichmacher-Membranen. Diese Methode wurde auf verschiedene Materialien angewendet, insbesondere auf im Handel erhältliche Polyurethan (Tecoflex und Tecothane).

Tenside werden sowohl in der chemischen, kosmetischen und pharmazeutischen Industrie als auch in der Biotechnologie sehr häufig und in vielfältiger Weise eingesetzt und gewinnen auch im Bereich neuartiger Materialien auf der Basis von Nanopartikeln zunehmend an Bedeutung. Dementsprechend ist auch die Analytik der Tenside von immer grösserer Bedeutung, insbesondere die Routineanalytik in chemischen, kosmetischen, pharmazeutischen und biotechnologischen Prozessen. Die bekannten Verfahren zur Messung von Tensiden verwenden unterschiedliche Endpunkte zur Bestimmung. Bereits lange bekannt sind Verfahren, die auf einer visuellen Bestimmung des Umschlagpunkts eines farbigen Indikators beruhen. Solche Verfahren haben den Nachteil, dass sie auf der Erfahrung der durchführenden Person beruhen und sehr zeitaufwendig sind. Sie sind zudem einer Automatisierung nur schwer zugänglich. In weiteren Verfahren wird der Endpunkt potentiometrisch bestimmt. Viele der hierfür verwendeten und kommerziell erhältlichen Elektroden basieren auf PVC-Membranen, die in der Regel zusätzlich ein Ionenpaar und Weichmacher enthalten. Derartige Membranen lösen sich in organischen Medien auf und können daher nicht in Zwei-Phasen-Titrations-Medien eingesetzt werden. Der Weichmacher (Membrananteil bis zu 60%) ist ebenfalls nachteilig, da der Weichmacher extrahiert werden kann.

Auf Kohlenstoff basierende Elektroden, z.B. in Form einer Paraffin/Graphit-Paste, können zwar in Medien mit einer organischen Phase verwendet werden, nutzen sich jedoch schnell ab und müssen daher laufend ersetzt oder zumindest aufwendig regeneriert werden. Die Regeneration muss sehr sorgfältig durchgeführt werden und erfordert Geschick und Erfahrung des Benutzers. Das gemessene Signal unterliegt Schwankungen, d.h., es ist instabil und driftet. In rein wässrigen Medien zeigen diese Elektroden zudem keine ausreichende Sensitivität mehr.

Sogenannte "polymer coated wire"-Elektroden, die in der Bestimmung von Tensiden ebenfalls eingesetzt werden, haben recht lange Ansprechzeiten, was sie für die Routineanalytik unbrauchbar macht. Zudem können sie in alkalischen Medien nicht eingesetzt werden, wie dies in der europäischen Norm EN 14669 verlangt wird. Auch bei solchen Elektroden weist das Mess-Signal keine ausreichende Stabilität auf und unterliegt einem Drift.

Die Bedeutung der Tensid-Analytik, z.B. im Umweltmonitoring, hat dazu geführt, dass die Methoden zur Durchführung dieser Analytik durch den Gesetzgeber normiert wurden. Hierfür einschlägige Normen sind zum Beispiel die europäischen Normen EN 14668, EN 14669 und EN 14480.

Die der vorliegenden Erfindung zugrunde liegende Aufgabe besteht darin, ein Sensormaterial zur potentiometrischen Bestimmung von Tensiden zur Verfügung zu stellen, das sowohl in rein wässrigen Medien aber besonders in Zweiphasen-Medien über einen grossen pH-Bereich eingesetzt werden kann. Das Sensormaterial bzw. die damit ausgestattete Elektrode soll zudem unterhaltsfrei sein und ein schnelles, präzises und stabiles Messsignal liefern.

Die Aufgabe wird durch die Verwendung eines Sensormaterials gemäss Anspruch 1 gelöst. Weitere bevorzugte Ausführungsformen sind Gegenstand der abhängigen Ansprüche.

Das zu verwendende Sensormaterial umfasst ein in organischen Lösungsmitteln zumindest beschränkt quellbares Polymermaterial. Die Shore-Härte des elastischen Polymermaterials liegt im Bereich von 74A bis 93A.

In einer weiteren bevorzugten Ausführungsform liegt die Shore-Härte des Polymermaterials im Bereich von 30D bis 80D, besonders bevorzugt zwischen 40D bis 77D und besonders bevorzugt im Bereich von 55D bis 75D.

Das Polymermaterial soll in gängigen organischen Lösungsmitteln, z.B. Methanol, Ethanol, Toluol, Ethylacetat, Aceton, Methylethylketon oder Methylisobutylketon nicht löslich, jedoch in begrenztem Umfang quellbar sein. Die Quellbarkeit in den organischen Lösungmitteln sollte zwischen 0.5% - -100%, vorzugsweise 1% - 50% bezogen auf das Anfangsvolumen des Polymermaterials betragen. Zur Messung der Quellbarkeit wurde jeweils ein Testkörper, z.B. eine kleine Scheibe, aus dem Polymermaterial in das gewünschte Lösungsmittel eingelegt, so dass der Testkörper komplett von Lösungsmittel umgeben war; und für längere Zeit (bis zu 24h) bei Raumtemperatur stehengelassen. Für kleinere Proben, z.B. Scheiben von maximal 2 mm Dicke, kann die maximale Quellung bereits nach ungefähr 12h erreicht sein. Das Sensormaterial kann vorteilhafterweise sowohl in rein wässrigen Medien als auch in Zwei-Phasen-Medien eingesetzt werden.

Im Gegensatz zu Sensormaterialien, die auf Graphit-Pasten basieren, unterliegt das erfindungsgemässe Sensormaterial in organischen Lösungsmitteln keinem Abtrag, d.h., es verschleisst nicht und muss weder nachgefüllt noch ersetzt werden, was eine dieses Material aufweisende Elektrode besonders benutzerfreundlich macht.

Das zu verwendende Sensormaterial kann zudem über einen pH-Bereich von 1 bis 13, also in sauren und alkalischen Medien verwendet werden. Die Einsetzbarkeit im alkalischen Bereich ist vorteilhaft, da dieser Bereich z.B. bei der Tensid-Bestimmung von Seifen wichtig ist. Das Sensormaterial zeigt im Einsatz bzw. im gequollenen Zustand vorteilhafterweise eine niedrige Impedanz von weniger als 1 MOhm. Insbesondere sollte das erfindungsgemässe Sensormaterial nach dem Quellen einen Impedanzwert von etwa 100 MOhm oder mehr, wie ihn z.B. weichmacherfreie Polymermembranen aufweisen, nicht überschreiten. Dieses vereinfacht den Aufbau der Messelektronik und macht aufwendige Abschirmungen überflüssig. Auch führt dies zu einer zusätzlichen Stabilität des Mess-Signals.

Gemäss der Erfindung umfasst das Sensormaterial einen lonophor. Geeignet als lonophoren sind lipophile Ionenpaare, insbesondere Tensid-Ionenpaare. Möglich sind jedoch auch nicht-tensidische Ionenpaare beziehungsweise Mischungen aus Ionenpaaren. Der Anteil des lonophors am Sensormaterial liegt im Bereich von 0 bis 10 Gewichtsprozenten (Gew.-%), bevorzugt im Bereich von 1 bis 3 Gew.-% und besonders bevorzugt bei etwa 2 Gew.-%. Durch das Einbringen des Ionophors als "aktive" Komponente des Sensormaterials kann zum einen eine Ionen-Selektivität herbeigeführt werden und zum anderen wird die Impedanz des erfindungsgemässen Sensormaterials weiter gesenkt, was für die Stabilität und Genauigkeit des Mess-Signals sehr vorteilhaft ist.

In einer weiteren bevorzugten Ausführungsform umfasst das Sensormaterial ein Additiv. Unter einem Additiv werden im Zusammenhang mit dieser Anmeldung Stoffe verstanden, die dem Sensormaterial beigefügt werden. Dies sind insbesondere Füllstoffe und Pigmente. Durch Pigmente ist es möglich, dem Sensormaterial eine spezifische Farbe zu verleihen. Damit kann z.B. für den Anwender eine optimale visuelle Unterscheidbarkeit von erfindungsgemässen Sensormaterialien mit unterschiedlichen lonophoren gewährleistet werden.

Als Polymermaterial haben sich aliphatische und aromatische Polyurethan-Ether, -Ester und -Carbonate als besonders geeignet erwiesen, Geeignete Polyurethane besitzen eine geeignete Härte und ausreichende Quellbarkeit in organischen Lösungsmitteln. Alternativ zu Polyurethanen sind auch Polysiloxane und Polysulfone als Polymermaterial denkbar. Geeignete Beispiele für aromatische Polyurethan-Ester, die in erfindungsgemässen Sensormaterialien verwendet werden können und daher besonders bevorzugt sind, sind unter den Handelsnamen Tygothane C210A, oder Nalgene 280 erhältlich. Ein geeignetes Beispiel für einen aliphatischen Polyurethan-Ether stellt beispielsweise der unter dem Handelsnamen Tecoflex EG93A bekannte Polyurethan-Ether dar.

In einer bevorzugten Ausführungsform wird der Ionophor aus der Gruppe von Hexadecylpyridinium Dodecylbenzolsulfonat, 1,3-Didecyl-2-methylImidazollum Dodecylsulfat und Benzethonium Dodecylsulfat ausgewählt.

In einer weiteren bevorzugten Ausführungsform wird das Additiv aus der Gruppe von Kohlenstoffpulver, Graphit, Titandioxid und Kupfer-Phtalocyanin ausgewählt. Kohlenstoffpulver, Titandioxid und Kupfer-Phtalocyanin können als Farbpigmente eingesetzt werden, wobei Kohlenstoffpulver eine schwarze, Titandioxid eine weisse und Kupfer-Phtalocyanin ein blaue Färbung des erfindungsgemässen Sensormaterials ergibt. Eine Beimischung von Graphit erhöht zudem In vorteilhafter Weise die elektrische Leitfähigkeit des Sensormaterials. Neben den beispielhaft angegebenen Additiven können selbstverständlich auch andere Additive beigegeben werden, um die Farbe oder Eigenschaften des Sensormaterials zu verändern.

Ein Verfahren zur Herstellung des zu verwendenden Sensormaterials umfasst folgende Schritte. In einem ersten Schritt wird das Polymermaterial, z.B. 5 Gew.-% der Gesamtlösung, in einem geeigneten organischen Lösungmittel, z.B. Tetrahydrofuran (THF) unter ständigem Rühren gelöst. Das Lösen des Polymermaterials dauert etwa 24h bis 120h. Nachdem eine homogene Lösung bzw. Suspension erhalten wurde, wird die so erhaltene Lösung bzw. Suspension in eine geeignete Form gegossen. Bei Raumtemperatur wird nun allmählich das Lösungsmittel verdampft, was zum langsamen Aushärten des Polymermaterials führt. Dies dauert je nach erwarteter Schichtdicke etwa 24h bis 120h. Das Erreichen der Gewichtskonstanz Ist ein Indikator für das Ende der Aushärtung. Im Verfahren wird ein Ionophor und/oder ein Additiv zugegeben.

In einer bevorzugten Ausführungsform des Verfahrens zur Herstellung des Sensormaterials umfasst das Verfahren folgende Schritte. In einem ersten Schritt wird das Polymermaterial, z.B. 5 Gew.-% der Gesamtlösung, in einem geeigneten organischen Lösungmittel, z.B. Tetrahydrofuran (THF) unter ständigem Rühren gelöst. Das Lösen des Polymermaterials dauert ungefähr 24h bis 120h. Anschliessend werden zur Polymerlösung der lonophor und, falls gewünscht, weitere Additive zugegeben. Nachdem eine homogene Lösung bzw. Suspension erhalten wurde, wird die so erhaltene Lösung bzw. Suspension in eine geeignete Form gegossen. Bei Raumtemperatur wird nun allmählich das Lösungsmittel verdampft, was zum langsamen Aushärten des Polymermaterials führt. Dies dauert wiederum ungefähr 24h bis 120h. Das derart ausgehärtete Sensormaterial kann nun in die gewünschte Form gebracht werden, z.B. durch Ausstanzen oder Ausschneiden von Folienstücken. Die Dicke der so erhaltenen Folienstücke beträgt vorzugsweise etwa 300 µm.

In einer weiteren bevorzugten Ausführungsform des Herstellungsverfahren des Sensormaterials wird das Polymermaterial wie oben bereits beschrieben in einem geeigneten Lösungsmittel gelöst und nach wahlweiser Zugabe eines Additivs direkt in eine gewünschte Form gegossen. Das Verdampfen des Lösungsmittels erfolgt wiederum bei Raumtemperatur über ungefähr 24 bis 120h. Auf diese Weise erhält man eine zunächst lonophor-freie Polymerfolie. Alternativ kann Polymermaterial mit einer grösseren Dicke auch durch ein geeignetes Extrusions- oder Walzverfahren in eine Polymerfolie der gewünschten Dicke überführt werden.

In einem weiteren Schritt kann die Polymerfolie nun einer Lösung mit dem gewünschten lonophor, z.B. einem lipophilen Ionenpaar, exponiert werden. Eine Expositionsdauer von ungefähr 30 Minuten kann bereits ausreichen, damit die Polymerfolie eine ausreichende Menge des lonophors aufnimmt. Alternativ zum Exponieren mit einer Lösung kann auch einfach eine Zweiphasen-Titration zum Einbringen des lonophors bzw. zur Aktivierung der Polymerfolie durchgeführt werden.

Erfindungsgemäss wird das Sensormaterial zur Bestimmung von ionischen oder nicht-ionischen Tensiden in in Zwei-Phasen-Titrationsmedien verwendet. Nicht-ionische Tenside werden zu diesem Zweck mit Hilfe von Barium-Salzen, z.B. BaCl₂, in pseudo-kationische Tenside überführt und vorzugsweise mit Tetraphenyl-Borat titriert.

Ein weiterer Aspekt der Erfindung betrifft eine potentiometrische Elektrode zur Bestimmung von Tensiden, welche ein zu verwendende Sensormaterial aufweist.

Im Folgenden wird das Sensormaterial sowie dessen Anordnung in einer Elektrode anhand von Beispielen weiter ausgeführt und erläutert. Es zeigen rein schematisch:
- Fig. 1: zeigt den Aufbau einer Tensid-Elektrode mit dem Sensormaterial;
- Fig. 2: zeigt die Resultate von vier Zwei-Phasen-Titrationen durchgeführt gemäss der europäischen Norm EN 14480;
- Fig. 3: zeigt den Vergleich der Resultate von drei Zwei-Phasen-Titrationen, die mit zwei kommerziell erhältlichen Tensid-Elektroden und einer Tensid-Elektrode mit dem zu verwendenden Sensormaterial durchgeführt wurden;
- Fig. 4: zeigt die Resultate von zwei Zwei-Phasen-Titrationen durchgeführt gemäss der europäischen Norm EN 14669;
- Fig. 5: zeigt die Resultate von zwei Zwei-Phasen-Titrationen mit zwei Elektroden mit dem zu verwendenden Sensormaterial durchgeführt nach der europäischen Norm EN 14480;
- Fig. 6: zeigt weitere Resultate von zwei Zwei-Phasen-Titrationen mit zwei Elektroden mit dem zu verwendenden Sensormaterial durchgeführt nach der europäischen Norm EN 14480; und
- Fig. 7: zeigt das Resultat einer Zwei-Phasen-Titrationen mit einer Elektroden mit dem zu verwendenden Sensormaterial durchgeführt nach der europäischen Norm EN 14668.

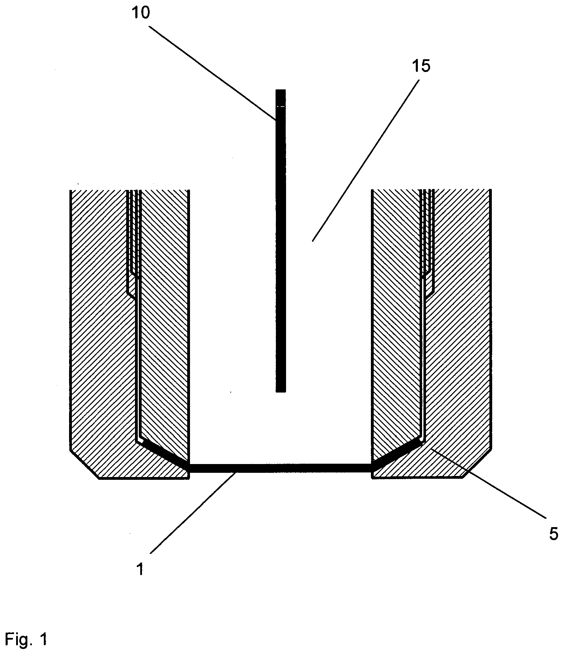

Figur 1 zeigt den schematischen Aufbau einer elektrochemischen bzw. potentiometrischen Elektrode zur Bestimmung von Tensiden mit Sensormaterial 1. Das Sensormaterial 1 ist mittels einer Klebeverbindung mit dem Elektrodengehäuse 5 fest verbunden. Im Inneren des Elektrodengehäuses 5 ist ein Referenzelement 10 angeordnet, welches über eine interne Fülllösung 15 in (elektrischem) Kontakt zum Sensormaterial 1 steht.

Alternativ zur Klebeverbindung zwischen dem Sensormaterial 1 und dem Elektrodengehäuse 5 sind auch andere Verbindungen, wie z.B. eine Schraubverbindung, denkbar.

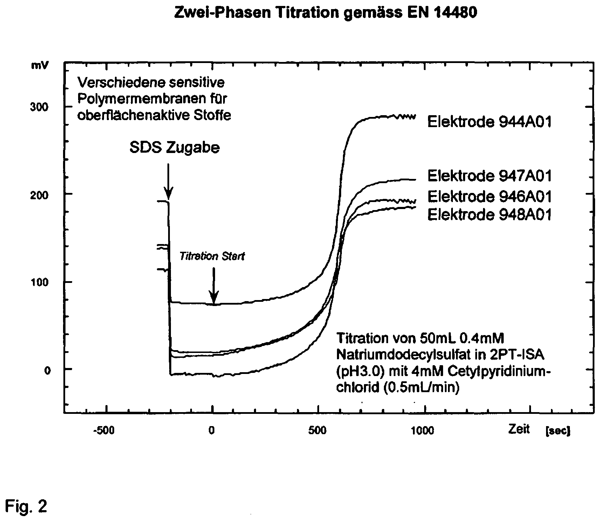

Figur 2 zeigt die Resultate von vier Zwei-Phasen-Titrationen von einer Natrium Dodecylsulfat (SDS) Lösung in 2PT-ISA, einem tensidfreiem Emulsionsgemisch gemäss der Norm EN 14480, mit Cetylpyridin Chlorid, welche gemäss der europäischen Norm EN 14480 durchgeführt wurde. Eingesetzt wurden vier Elektroden mit unterschiedlichen Sensormaterialien. Die Elektrode 944A01 enthielt ein Sensormaterial mit dem Polyurethan Nalgene 280. Die Elektrode 947A01 enthielt ein Sensormaterial mit dem Polyurethan Tygothan C210A (98 Gew.-%) und Benzethonium Dodecylsulfat als Tensid-Ionenpaar (2 Gew.-%). Die Elektrode 946A01 enthielt ein Sensormaterial mit dem Polyurethan Tygothan C210A (98 Gew.-%) und 1,3-Didecyl-2-methylimidazolium Dodecylsulfat als Tensid-Ionenpaar (2 Gew.-%). Die Elektrode 948A01 enthielt ein Sensormaterial mit dem Polyurethan Tygothan C210A (98 Gew.-%) und Hexadecylpyridinium Dodecylbenzolsulfonate als Tensid-Ionenpaar (2 Gew.-%).

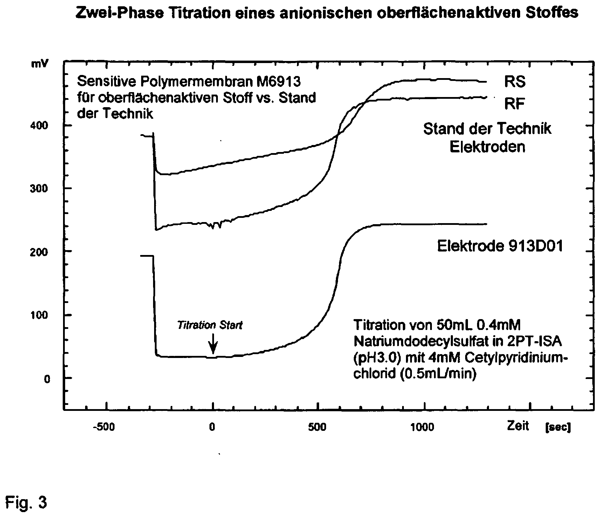

Figur 3 zeigt den Vergleich der Resultate von drei Zwei-Phasen-Titrationen, die mit zwei kommerziell erhältlichen Tensid-Elektroden (RF, RS) und einer Tensid-Elektrode (913D01) mit dem zu verwendenden Sensormaterial durchgeführt wurden. Die Elektrode 913D01 enthielt das erfindungsgemässe Sensormaterial mit Tygothane C210A.

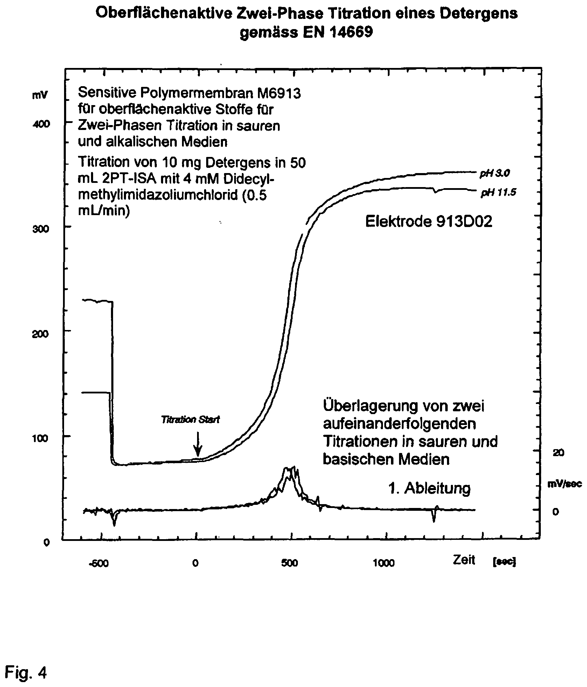

Figur 4 zeigt die Resultate von zwei Zwei-Phasen-Titrationen durchgeführt gemäss der europäischen Norm EN 14669. Die beiden Titration wurden je einmal im sauren Bereich (pH 3.0) und im alkalischen Bereich (pH 11.5) durchgeführt und zeigen die Verwendbarkeit des Sensormaterials sowohl im sauren als auch im alkalischen Bereich. Das verwendete Polyurethan war Tygothan C210A. Das titrierte Detergens war eln handelsübliches Geschirrspülmittel, welches in 2PT-ISA mit Didecylmethylimidazolium Chlorid titriert wurde,

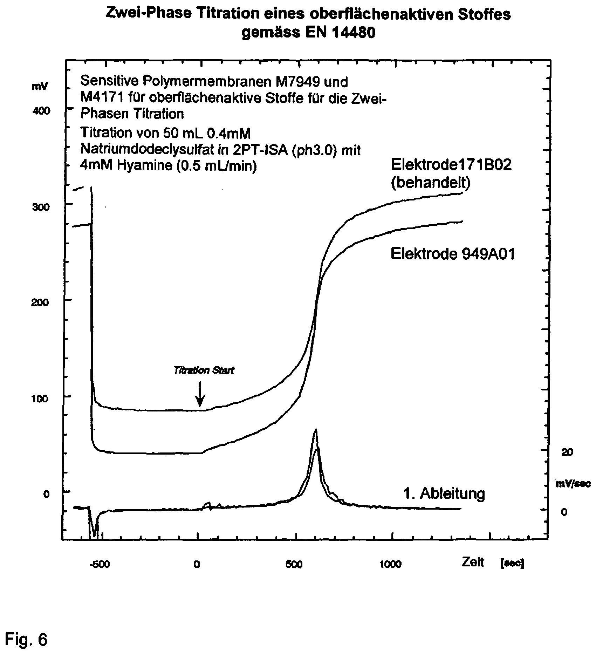

Figur 6 zeigt die Resultate von zwei Zwei-Phasen-Titrationen, die mit zwei Elektroden mit dem zu verwendenden Sensormaterial nach der europäischen Norm EN 14480 durchgeführt wurden. Titriert wurde SDS in 2PT-ISA mit Hyamine. Das Sensormaterial beider Elektroden enthielt das Polyurethan Tygothan C210A. Die Elektrode 918B01 wurde Jedoch vor ihrem Einsatz mit einer Ionophor enthaltenden Lösung behandelt bzw. konditioniert.

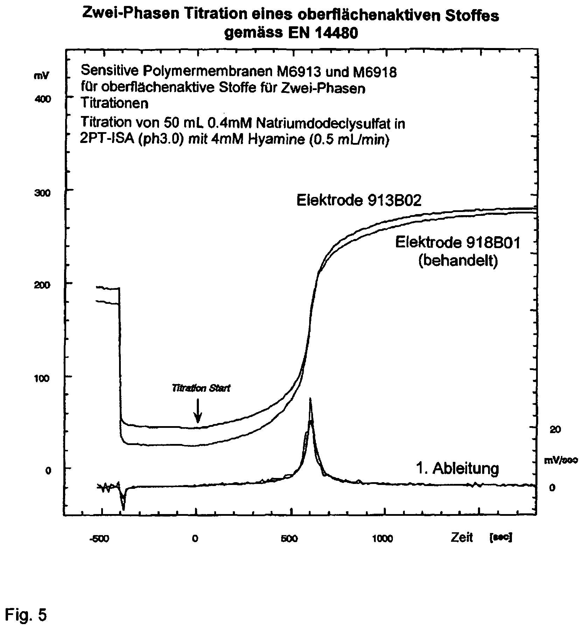

Figur 6 zeigt weitere Resultate von zwei Zwei-Phasen-Titrationen mit zwei Elektroden mit dem zu verwendenden Sensormaterial durchgeführt nach der europäischen Norm EN 14480. Titriert wurde SDS in 2PT-ISA mit Hyamine. Die Elektrode 171B02 enthielt als Polyurethan Tecoflex EG93A und war vor ihrem Einsatz wie unter Figur 5 beschrieben ebenfalls konditioniert worden. Die Elektrode 949A01 enthielt als Polyurethan Tecoflex EG93A (98 Ges.-%) und als Tensid-Ionenpaar Benzethonium Dodecylsulfat (2 Gew.-%).

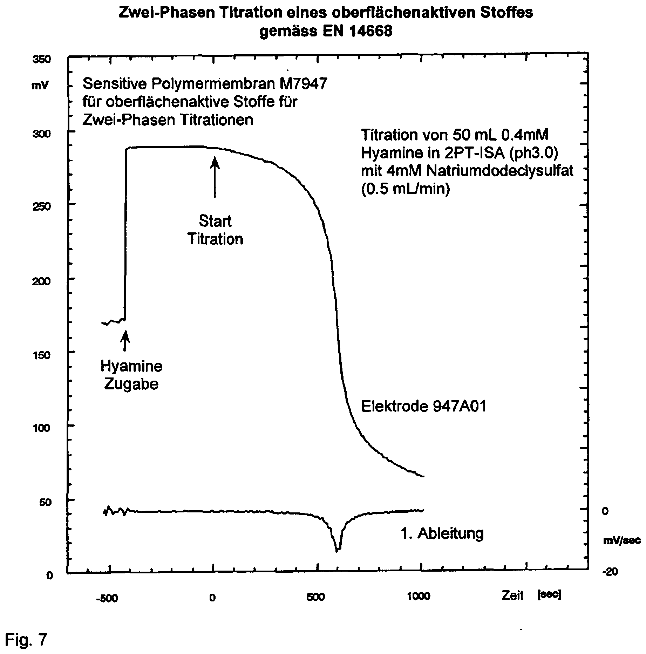

Fig 7 zeigt das Resultat einer Zwei-Phasen-Titrationen mit einer Elektroden mit dem zu verwendenden Sensormaterial durchgeführt nach der europäischen Norm EN 14668. Titriert wurde Hyamine in 2PT-ISA mit SDS. Die Elektrode enthielt das erfindungsgamässe Sensormaterial mit dem Polyurethan Tecoflex EG93A (98 Ges.-%) und als Tensid-Ionenpaar Benzethonium Dodecylsulfat (2 Gew.-%).

## Patentansprüche

1. Verwendung eines Sensormaterials für eine potentiometrische Elektrode zur Bestimmung von ionischen oder nicht-ionischen Tensiden in Zweiphasen-Medien, wobei das Sensormaterial ein in organischen Lösungsmitteln quellbares Polymermaterial mit einer Shore-Härte im Bereich von 74A bis 93A und einen Ionophor umfasst, wobei das Polymermaterial ein aliphatischer oder aromatischer Polyurethan-Ether, -Ester oder -Carbonat ist.

2. Verwendung eines Sensormaterials gemäss Anspruch 1, wobei das Sensormaterial ein Additiv umfasst.

3. Verwendung eines Sensormaterials gemäss einem der Ansprüche 1 bis 2, wobei der Ionophor ausgewählt wird aus der Gruppe bestehend aus Hexadecylpyridinium Dodecylbenzolsulfonat, 1,3-Didecyl-2-methylimidazolium Dodecylsulfat und Benzethonium Dodecylsulfat.

4. Verwendung eines Sensormaterials gemäss einem der Ansprüche 2 bis 3, wobei das Additiv ausgewählt wird aus der Gruppe bestehend aus Kohlenstoffpulver, Graphit, Titandioxid und Kupfer-Phtalocyanin.

## Claims

1. Use of a sensor material for a potentiometric electrode for the determination of ionic or non-ionic surfactants in two-phase media, wherein the sensor material comprises a polymer material that swells in organic solvents, having a Shore hardness in the range of 74A to 93A, and an ionophore, wherein the polymer material is an aliphatic or aromatic polyurethane ether, polyurethane ester or polyurethane carbonate.

2. Use of a sensor material according to Claim 1, wherein the sensor material comprises an additive.

3. Use of a sensor material according to either of Claims 1 or 2, wherein the ionophore is selected from the group consisting of hexadecylpyridinium dodecylbenzenesulphonate, 1,3-didecyl-2-methylimidazolium dodecylsulphate and benzethonium dodecylsulphate.

4. Use of a sensor material according to either of Claims 2 or 3, wherein the additive is selected from the group consisting of carbon powder, graphite, titanium dioxide and copper phthalocyanine.

## Revendications

1. Utilisation d'un matériau capteur pour une électrode potentiométrique pour la détermination d'agents tensioactifs ioniques ou non-ioniques dans des milieux à deux phases, le matériau capteur comprenant un matériau polymère, gonflable dans des solvants organiques, avec une dureté Shore dans un domaine de 74A à 93A, et un ionophore, le matériau polymère étant un polyuréthane-éther, -ester ou - carbonate aliphatique ou aromatique.

2. Utilisation d'un matériau capteur selon la revendication 1, le matériau capteur comprenant un additif.

3. Utilisation d'un matériau capteur selon l'une des revendications 1 à 2, l'ionophore étant choisi dans le groupe consistant en dodécylbenzènesulfonate de hexadécylpyridinium, dodécylsulfate de 1,3-didécyl-2-méthylimidazolium et dodécylsulfate de benzéthonium.

4. Utilisation d'un matériau capteur selon l'une des revendications 2 à 3, l'additif étant choisi dans le groupe consistant en poudre de carbone, graphite, dioxyde de titane et phtalocyanine de cuivre.
